(19) Europäisches Patentamt / European Patent Office / Office européen des brevets

(11) **EP 3 767 553 A1**

(12) **EUROPEAN PATENT APPLICATION**

(43) Date of publication:
20.01.2021 Bulletin 2021/03

(51) Int Cl.:
**G06N 20/00** (2019.01)　　　　**H04L 29/06** (2006.01)

(21) Application number: **19186914.8**

(22) Date of filing: **18.07.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **THOMSON LICENSING**
**35510 Cesson-Sévigné (FR)**

(72) Inventors:
• **GILBERTON, Philippe**
　**35576 CESSON-SEVIGNE (FR)**
• **QUANG-KHANH-NGOC, Duong**
　**35576 CESSON-SEVIGNE (FR)**
• **VIGOUROUX, Jean-Ronan**
　**35576 CESSON-SEVIGNE (FR)**

(74) Representative: **Vidon Brevets & Stratégie**
**16B, rue de Jouanet**
**BP 90333**
**35703 Rennes Cedex 7 (FR)**

(54) **METHOD AND DEVICE FOR DETECTING ANOMALIES, CORRESPONDING COMPUTER PROGRAM PRODUCT AND NON-TRANSITORY COMPUTER-READABLE CARRIER MEDIUM**

(57) A method for detecting anomalies, the method being performed by a machine learning system (130) configured for learning at least one model (132) from a set of training data, the method including receiving sensor data from a plurality of N sensors (100), computing an anomaly prediction based on the sensor data and the at least one model, and if the anomaly prediction is an anomaly detection, sending an anomaly event (11) containing said anomaly prediction. The method further includes receiving a user feedback (12) relating to said anomaly event or to an absence of anomaly event, and adapting the at least one model based on the user feedback.

**Figure 1**

EP 3 767 553 A1

**Description**

## 1. TECHNICAL FIELD

The field of the disclosure is that of machine learning (ML) and anomaly detection.

More specifically, the present disclosure relates to an anomaly detection method performed by a machine learning system.

Performing machine learning involves creating a model, which is trained on some training data and then can process additional data to make predictions. Various types of models are known for machine learning systems (e.g., artificial neural networks, decision trees, support vector machines, Bayesian networks, genetic algorithms and the like).

Within the field of machine learning (ML), there are two main types of approaches: supervised, and unsupervised. The main difference between the two types is that supervised learning is done with prior knowledge of what the output values for the samples should be. Therefore, the goal of supervised learning is to learn a function that, given a sample of data and desired outputs, best approximates the relationship between input and output observable in the data. Unsupervised learning, on the other hand, does not have labeled outputs, so its goal is to infer the natural structure present within a set of data points. In other words, a supervised learning algorithm uses a set of data that contains both the inputs and the desired outputs, when an unsupervised learning algorithm takes a set of data that contains only inputs.

Traditionally, an anomaly detection method includes receiving sensor data from a plurality of N sensors, computing an anomaly prediction based on the sensor data and the at least one model, and if the anomaly prediction is an anomaly detection, sending an anomaly event containing the anomaly prediction.

The present disclosure can be applied notably, but not exclusively, for detecting domestic anomalies relying on a collection of a plurality of data over time originating from home sensors. In this particular case, to be as seamless as possible for the end user during the learning phase, an unsupervised ML approach is often considered which allows the system to learn and adapt by itself the domestic habits and the change of environment of the end user. The goal is to build a model of a normal situation at home and to notify to the end user the domestic anomalies that could occur over time. To do so a plurality of sensors is deployed at home and will be defined as the modalities necessary for the ML to build the model.

## 2. TECHNOLOGICAL BACKGROUND

A recurrent problem when using an anomaly detection method is how to update relevantly the model, in particular in an unsupervised ML (but also in a supervised ML). Indeed, for a model to predict accurately, the data that it is making predictions on must have a similar distribution as the data on which the model was trained. Because data distributions can be expected to drift over time, deploying a model is not a one-time exercise but rather a continuous process.

Traditionally, updating the model is carried out by re-training the model with a supplemental set of newer training data. In other words, it is a known practice to continuously monitor the incoming data and re-train the model on newer training data if the data distribution has deviated significantly from the original training data distribution. If monitoring data to detect a change in the data distribution has a high overhead, then an alternative and simpler strategy is to re-train the model periodically, for example, daily, weekly, or monthly. This is the reason why many models are being re-trained very often as a default.

However, the aforesaid known solution for updating the model, consisting in re-training the model, has several drawbacks.

A first drawback is that futile excess re-training can occur when re-training the model periodically, which has costs (computational, evaluation, implementation complexity, etc.).

A second drawback is that re-training the model with newer training data is not always optimal because the newer training data are not always the most adapted to the user and/or his home. In other words, the known solution is not always adjusted to personalized anomaly situations and/or the domestic habits of each user.

A third drawback is that re-training the model has no extension capability when adding or removing a sensor to the current plurality of sensors, during the production phase (use of the model) following the learning phase of the model.

## 3. SUMMARY

A particular aspect of the present disclosure relates to a method for detecting anomalies, the method being performed by a machine learning system configured for learning at least one model from a set of training data, the method including:

- receiving sensor data from a plurality of N sensors;
- computing an anomaly prediction based on the sensor data and the at least one model; and

- if the anomaly prediction is an anomaly detection, sending an anomaly event containing the anomaly prediction;

The method further includes:

- receiving a user feedback relating to the anomaly event or to an absence of anomaly event; and
- adapting the at least one model based on the user feedback.

The general principle of the proposed solution is to adapt the model(s) based on the user feedback. We assume that the model(s) has (have) been previously learned during a learning phase (for example of the unsupervised learning type or, in a variant, of the supervised learning type).

The user feedback requires only a slight intervention of the user (with e.g. only a binary answer required) and occurs for example in at least one of the following cases:

- "false positive": to indicate that the anomaly prediction contained in the anomaly event is incorrect (i.e. when an anomaly is falsely detected meaning that the model detected the event as an anomaly but the event was not an anomaly);
- "true positive": to indicate that the anomaly prediction contained in the anomaly event is correct (i.e. when an anomaly is truly detected meaning that the model detected the event as an anomaly and the event was an anomaly); or
- "false negative": to indicate an absence of anomaly event, corresponding to an incorrect no-anomaly prediction (i.e. when an event has occurred which should have been detected as an alarm but has not been detected as such).

The proposed solution (adapting the model(s) based on the user feedback) has several advantages:

- the model(s) will better perform (no (or less) "false positive" or "false negative");
- the adaptation of the model(s) can be carried out either alone or in combination with a re-training of the model(s) using a supplemental set of training data, thus futile excess re-training (and corresponding costs) can be reduced or avoided;
- the model(s) is(are) adapted to the user and/or his home, and therefore adjusted to personalized anomaly situations and/or domestic habits of each user.

According to a first embodiment, the machine learning system includes:

- at least two mono-modal anomaly models, each associated with a different one of the plurality of N sensors, and each configured for computing a mono-modal anomaly prediction based on the sensor data from the associated sensor; and
- a decision maker, configured for computing the anomaly prediction by applying at least one decision rule to the mono-modal anomaly predictions;

and adapting the at least one model based on the user feedback includes at least one of:

- adapting at least one of the mono-modal anomaly models; and
- adapting the at least one decision rule.

According to a particular feature of the first embodiment, in the at least one decision rule, each mono-modal anomaly prediction is weighted by an associated weight factor, and wherein adapting the at least one decision rule includes at least one of:

- adapting at least one of the weight factors; and
- adapting a threshold to which is compared a combination of the mono-modal anomaly predictions when weighted by their respective weighting factors.

According to a particular feature of the first embodiment, the adapting of at least one of the weight factors includes: if the user feedback indicates that the anomaly prediction contained in the anomaly event is correct, increasing the weight factor of each mono-modal anomaly prediction leading to the correct anomaly prediction and decreasing the weight factor of each mono-modal anomaly prediction not leading to the correct anomaly prediction.

According to a particular feature of the first embodiment, the adapting of at least one of the weight factors includes: if the user feedback indicates that the anomaly prediction contained in the anomaly event is incorrect, increasing the weight factor of each mono-modal anomaly prediction not leading to the incorrect anomaly prediction and decreasing the weight factor of each mono-modal anomaly prediction leading to the incorrect anomaly prediction.

According to a particular feature of the first embodiment, the adapting of at least one of the weight factors includes: if the user feedback indicates an absence of anomaly event, corresponding to an incorrect no-anomaly prediction, increasing the weight factor of each mono-modal anomaly prediction not leading to the incorrect anomaly prediction and decreasing the weight factor of each mono-modal anomaly prediction leading to the incorrect anomaly prediction.

According to a particular feature of the first embodiment, when a new sensor is added to the plurality of N sensors, the method further includes:

- adding a new mono-modal anomaly model for analyzing sensor data from the new sensor; and
- initializing as 1 the weight factor of the new mono-modal anomaly model while adjusting as $\alpha_i = \alpha_i*N/(N+1)$ the weight factors for other existing mono-modal anomaly models, with $\alpha_i$ the weight factor of the i$^{th}$ sensor.

According to a particular feature of the first embodiment, when a given sensor of the plurality of N sensors is detected defective or associated with a mono-modal anomaly model detected unreliable, the method further includes:

- removing from the plurality of N mono-modal anomaly models the mono-modal anomaly model associated with the given sensor; and
- adjusting the weight factors of the remaining N-1 mono-modal anomaly models as $\alpha_i = \alpha_i*N/(N-1)$, with $\alpha_i$ the weight factor of the i$^{th}$ sensor.

According to a second embodiment, the machine learning system includes a single multi-modal anomaly model, configured for:

- computing a multi-modal anomaly prediction, based on the sensor data from the plurality of sensors; and
- computing the anomaly prediction based on a comparison between the multi-modal anomaly prediction and a threshold;

and adapting the at least one model based on the user feedback includes adapting the single multi-modal anomaly model.

According to a particular feature of the second embodiment, adapting the single multi-modal anomaly model includes adapting the threshold.

According to a particular feature of the first and/or second embodiment, adapting the at least one model based on the user feedback is not performed if a false detection rate is under a determined level.

According to a particular feature of the first and/or second embodiment, the method further includes:

- generating a supplemental set of training data based on the user feedback and the sensor data from the plurality of N sensors; and
- re-training the at least one model with the supplemental set of training data.

Another aspect of the present disclosure relates to a computer program product including program code instructions for implementing the aforesaid method (in any of its embodiments), when the program is executed on a computer or a processor.

Another aspect of the present disclosure relates to a non-transitory computer-readable carrier medium storing the aforesaid computer program product.

Another aspect of the present disclosure relates to a device for detecting anomalies, the device including a reprogrammable or dedicated computation machine configured for implementing a machine learning system itself configured for:

- learning at least one model from a set of training data;
- receiving sensor data from a plurality of N sensors;
- computing an anomaly prediction based on the sensor data and the at least one model; and
- if the anomaly prediction is an anomaly detection, sending an anomaly event containing the anomaly prediction;

the machine learning system is further configured for:

- receiving a user feedback relating to the anomaly event or to an absence of anomaly event; and
- adapting the at least one model based on the user feedback.

According to one implementation, the different steps of the method for detecting anomalies as described here above are implemented by one or more software programs or software module programs including software instructions intended for execution by a data processor of a device for detecting anomalies executed within an operating system of an electronic device, these software instructions being designed to command the execution of the different steps of the methods according to the present principles.

A computer program is also disclosed that is capable of being executed by a computer or by a data processor, this program including instructions to command the execution of the steps of a method for detecting anomalies executed within an operating system of an electronic device, as mentioned here above.

This program can use any programming language and be in the form of source code, object code or intermediate code between source code and object code, such as in a partially compiled form or any other desirable form.

The information carrier can be any entity or apparatus capable of storing the program. For example, the carrier can comprise a storage means such as a ROM, for example a CD ROM or a microelectronic circuit ROM, or a magnetic recording means, for example a floppy disk or a hard disk drive.

Again, the information carrier can be a transmissible carrier such as an electrical or optical signal which can be conveyed via an electrical or optical cable, by radio or by other means. The program according to the present principles can be especially uploaded to an Internet type network.

As an alternative, the information carrier can be an integrated circuit into which the program is incorporated, the circuit being adapted to executing or to being used in the execution of the methods in question.

According to one embodiment, the methods/apparatus may be implemented by means of software and/or hardware components. In this respect, the term "module" or "unit" can correspond in this document equally well to a software component and to a hardware component or to a set of hardware and software components.

A software component corresponds to one or more computer programs, one or more sub-programs of a program or more generally to any element of a program or a piece of software capable of implementing a function or a set of functions as described here below for the module concerned. Such a software component is executed by a data processor of a physical entity (terminal, server, etc.) and is capable of accessing hardware resources of this physical entity (memories, recording media, communications buses, input/output electronic boards, user interfaces, etc.).

In the same way, a hardware component corresponds to any element of a hardware unit capable of implementing a function or a set of functions as described here below for the module concerned. It can be a programmable hardware component or a component with an integrated processor for the execution of software, for example an integrated circuit, a smartcard, a memory card, an electronic board for the execution of firmware, etc.

A non-transitory processor readable medium having stored thereon such a program is also disclosed.

It is to be understood that both the foregoing general description and the following detailed description are exemplary and explanatory and are not restrictive of the disclosure, as claimed.

It must also be understood that references in the specification to "one embodiment" or "an embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

## 4. BRIEF DESCRIPTION OF THE DRAWINGS

Other features and advantages of embodiments shall appear from the following description, given by way of indicative and non-exhaustive examples and from the appended drawings, of which:

- Figure 1 is a schematic illustration of a system including an anomaly detection device according to a first implementation;
- Figure 2 is a flowchart of an anomaly detection method according to a particular embodiment of the disclosure;
- Figure 3 is a flowchart of an algorithm carried out when a new sensor is added;
- Figure 4 is a flowchart of an algorithm carried out when a sensor is detected defective or associated with a model detected unreliable;
- Figure 5 is a schematic illustration of a system including an anomaly detection device according to a second implementation; and
- Figure 6 shows an example of simplified structure of any of the anomaly detection devices of figures 1 and 5.

## 5. DETAILED DESCRIPTION

In all of the figures of the present document, similar elements and steps are designated by the same numerical reference sign.

In the following description, the considered application example is a system for detecting domestic anomalies relying on a collection of a plurality of data over time originating from home sensors. The present disclosure is not limited to this particular implementation and can be of interest in any context requiring the detection of anomalies using a machine learning (ML) system and sensor data coming from a plurality of sensors.

Anomaly detection definition: in the considered application example, anomaly detection refers to any domestic unexpected change of individual's or household's habits or unexpected event occurrence. The anomaly detection relies on a continuous monitoring of many sensors installed at home. The anomaly detection addresses e.g. the e-health/senior care, wellbeing, home security service areas, etc.

Anomaly threshold (or weight) setting: as it is a notion that varies from one household to another, and from sensors to sensors, the service architecture should be flexible to adapt to each situation.

A first possible way to cope with this flexibility is to ask the user to configure the anomaly detection system, through for example a household profile completed by each family member or by one member who would be considered as the household administrator. The user should have the possibility with a user interface (UI) to define an anomaly threshold for all or a particular sensor. For instance, the end user will choose min/max thresholds for the temperature sensor for which any measured value that would be out-of-range of those defined thresholds would be considered as an anomaly. The personal anomaly settings could be configured at the first-time power on of the system in a dedicated profile page displayed in the UI.

A second possible way is through an automatic anomaly detection system, which will determine an anomaly score, or an anomaly probability, for each set of simultaneous measures of the sensors values, or for a block of measures collected on a sliding window corresponding to the recent past.

The household can be extended to the size of a building containing many households and managed in this case by a dedicated enterprise (real estate, property syndic, etc.).

Anomaly level (optional): the anomaly event sent to the end user can be classified into different levels from low priority (just informative) to high priority (emergency) depending e.g. on event occurrence periodicity and/or gradient sensor data value variation/fluctuation over time.

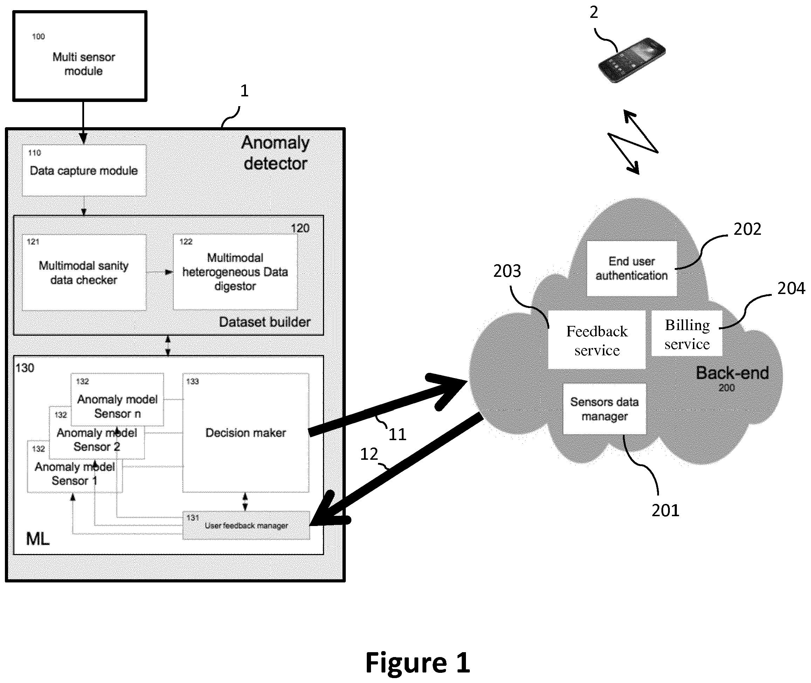

Referring now to **figure 1**, a system including an anomaly detection device 1 (also referred to as "anomaly detector") according to a first implementation is illustrated.

In this particular embodiment, the system includes:

- a plurality of N sensors, which are e.g. comprised in a multi sensor module 100 installed in a domestic area. An exemplary list of sensors includes but is not limited to: temperature sensors, pressure sensors, infrared sensors (single or matrix), IMU (Inertial Measurement Unit) sensors, vibration sensors, microphone, geophone, CO/$CO_2$ gas sensor, light/color sensor, proximity sensors, etc.;
- a end user terminal 2 (e.g. smartphone, tablet, laptop, computer, etc.) executing an anomaly service application;
- a back-end 200, performing the backend function which receives anomaly events from the anomaly detector 1 and provides the events to the end user terminal 2. This process may rely on, for example, a push notification service; and
- the anomaly detector 1, configured to communicate with the back-end 200 and the multi sensor module 100. In a particular embodiment, the anomaly detector 1 is a standalone device. In a variant, the anomaly detector 1 is installed in another device, e.g. a set-top-box (STB) or a gateway.

In a particular embodiment, the backend function performed by the back-end 200 includes the following non-exhaustive list of sub-functions:

- sensor data management service 201 that gathers the last data status/values prior to and on the anomaly event occurrence. As an exemplary the preceding time corresponding to the backward sensors data status could be set to 5 minutes. This will help the service administrator to know more about the reason of anomaly occurrence;
- end user authentication service 202 that gives credentials to the end user to get access to the event occurrence over time, create and edit end user profiles, billing status, end user account service at large;
- feedback service 203 that offers the possibility to the end user through a UI to give feedback on the anomaly occurrence when it's wrong and when it's correct to enhance the model(s). The feedback could be binary (e.g., yes/no, agree/disagree) to notify to the anomaly detector that it performed a right or wrong anomaly detection. In a particular embodiment, the feedback also includes the status of each sensor at the event occurrence and over a defined (fixed or variable) temporal window, for example the last 5 minutes of sensor data preceding and including the anomaly event. This allows a post analysis of the anomaly by experts for example to determine its cause. Alternatively to this embodiment, the end user feedback service could be implemented directly on the anomaly detector side through a dedicated UI installed in the anomaly detector 1; and
- billing service 204 that performs the accountability of the service according to the end user usage and his account profile.

In the first implementation shown in figure 1, the anomaly detector 1 includes the following blocks (also referred to as "modules"):

- block 110 is a "data capture module" that collects the heterogeneous sensor data (from the multi sensor module 100), samples the data if required in a digital domain if not already performed, time stamp the data under the same clock (e.g., wall clock) so that the captured data from different sensors can be synchronized prior the processing step. Then the data capture module 110 aggregates the data in a formatted file for further processing performed in the dataset builder 120;
- block 120 is a "dataset builder" that creates a dataset from the sensor data provided by the data capture module 110. During the learning phase, the created dataset is a set of training data, to be used by block 130 to learn (i.e. build and/or train) the model(s). During the production phase, the created dataset is a set of decisional data, to be used by block 130 to detect an anomaly and generate an anomaly prediction. The dataset builder 120 includes the following blocks:

  ◦ block 121 is a "multimodal sanity data checker" that checks the sanity of data (detection of problems such as missing, malformed, duplicated or noisy data) in order to clean and present the data to the block 122;
  ◦ block 122 is a "multimodal heterogeneous data digestor" that aggregates the heterogeneous data tagged with their respective timestamp and format the data with a common tick. Due to the heterogeneity of data values, a normalization might be applied. Those data form a dataset which is ready for being presented to block 130;

- block 130 is a "machine learning (ML) system" that receives the dataset provided by the block 120. During the learning phase, the ML system 130 uses the dataset to learn (i.e. build and/or train) the model(s). During the production phase, the ML system 130 uses the dataset, and the learned model, to detect an anomaly and generate an anomaly prediction. The ML system 130 includes the following blocks, which are further described below: N blocks 132 (each associated with a different one of the N sensors), a block 133 and a block 131.

Each block 132 manages a mono-modal anomaly model associated with one of the N sensors. During the learning phase, block 132 uses the dataset (outputted by block 120) to learn (i.e. build and/or train) a mono-modal anomaly model associated with one of the N sensors. For this purpose, block 132 includes a feature extraction function that could be different for each sensor as each sensor has its own characteristics relevant for training properly the mono-modal anomaly model. During the production phase, block 132 uses the dataset (outputted by block 120), and the learned mono-modal anomaly model, to compute a mono-modal anomaly prediction. In other words, the N blocks 132 build N mono-modal anomaly models and generate N mono-modal anomaly predictions.

In one embodiment of each block 132, the mono-modal anomaly model outputs a mono-modal anomaly prediction which is a probability of being yes (anomaly) or no (no anomaly) associated with the current values of the associated sensor (or the values of this sensor in a defined temporal window). This probability is computed based on one or several anomaly thresholds which are e.g. set by default (at the initialization of the system) or configured by the end user (or the household administrator). For example, the minimum and maximum bedroom's temperature could be set respectively at 18°C (night) and 20°C (daylight) on a dedicated or combined yearly/daily/hourly time range.

In another implementation of each block 132, all the current sensor values (or the values in a temporal sliding window from the past) are examined and a global anomaly score is computed. This may involve keeping in a log file the recent values, for anomaly score computation, and a longer past, for model re-training. The values kept in this log file are supposed to be only normal values (no anomalies), as this is customary in the field of anomaly detection. Note that, when nothing happens (i.e. no false alarm is remarked from the user feedback), the collected data from sensors will be added to the database (including the set of training data) as "normal" label. This allows the system to continuously learn from the updated database (i.e. the supplemental set of training data) collected on the fly by e.g. re-training each mono-modal anomaly model after several days or weeks.

The block 133 is a "decision maker" (or "model fusion block") that is configured for:

- computing a final anomaly prediction based on a rule engine (including at least one decision rule) and the N mono-modal anomaly predictions (provided by the N mono-modal anomaly models of the N blocks 132). In an embodiment, the rule engine has a default decision tree architecture at the initialization of the system;
- comparing the final anomaly prediction p with a threshold S and deciding that the final anomaly prediction $p$ is an anomaly detection if it is greater than the threshold S; and
- if the final anomaly prediction $p$ is an anomaly detection, sending an anomaly event 11 containing the anomaly detection.

In one embodiment of block 133, each of the N mono-modal anomaly predictions is weighted by an associated weight factor. The final anomaly prediction *p* (for all sensors) is a combination of the N weighted mono-modal anomaly predictions and is computed as follows:

$$p = \frac{1}{N}\sum_{i=1}^{N} \alpha_i p_i$$

with $\alpha_i$ the weight factor of the i$^{th}$ sensor, and
$p_i$ the anomaly probability (also referred to as "anomaly score") outputted by the mono-modal anomaly model of the i$^{th}$ sensor.

The block 131 is a "user feedback manager" that:

- receives a user feedback 12 from the end user terminal 2, via the back-end 200. The user feedback relates to the anomaly event 11 or to an absence of anomaly event; and
- adapts, based on the user feedback:

  ○ one, several or all of the N mono-modal anomaly models of the N blocks 132, and/or
  ○ the rule engine of the block 133 ("decision maker") including at least one decision rule, i.e.:

    ▪ one, several or all of the N weight factors $\alpha_1$ to $\alpha_N$ ; and/or
    ▪ the threshold S.

In an embodiment, adapting at least one of the blocks 132 and/or the block 133 is not performed if a false detection rate is under a determined level, to prevent having more missed true alarm detections (i.e. "false negative" cases).

Example of using user feedback to adapt the weight factors $\alpha_1$ to $\alpha_N$. Initially, without any user feedback, the N weight factors are set equally to 1. Then, after receiving user feedback, the N weight factors are adjusted as specified in the following table:

| Sensor type | ML models | Anomaly prediction | Weight factor |
|---|---|---|---|
| Audio | Model_1 | YES | $\alpha_1$ |
| Temperature | Model_2 | NO | $\alpha_2$ |
| Vibration | Model_3 | YES | $\alpha_3$ |
| Anomaly decision | | YES | |
| User feedback | | NO (i.e. false alarm) | Adjusting weight factors: increase $\alpha_2$ compared to $\alpha_1$ and $\alpha_3$ |

In this example, both mono-modal anomaly models "Model_1" and "Model_3", learned from audio and vibration sensor respectively, output "YES" (i.e. "anomaly") and thus the final decision is "Anomaly". However, via the feedback, the user confirms that it is a false alarm ("false positive"), which corresponds to the prediction result of "Model_2" associated with temperature sensor. Then the system may slightly increase weight factor $\alpha_2$ corresponding to the "Model_2" compared to the weight factors $\alpha_1$ and $\alpha_3$ so that the next similar situation the system will rely a bit more on "Model_2" to output the final decision.

In other words, if the user feedback 12 indicates that the anomaly prediction contained in the anomaly event 11 is incorrect, the block 131 increases the weight factor of each mono-modal anomaly prediction not leading to the incorrect anomaly prediction and decreases the weight factor of each mono-modal anomaly prediction leading to the incorrect anomaly prediction.

Optionally, if the user feedback 12 indicates that the anomaly prediction contained in the anomaly event 11 is correct, the block 131 increases the weight factor of each mono-modal anomaly prediction leading to the correct anomaly prediction and decreases the weight factor of each mono-modal anomaly prediction not leading to the correct anomaly prediction.

Optionally, if the user feedback 12 indicates an absence of anomaly event, corresponding to an incorrect no-anomaly prediction, the block 131 increases the weight factor of each mono-modal anomaly prediction not leading to the incorrect anomaly prediction and decreases the weight factor of each mono-modal anomaly prediction leading to the incorrect anomaly prediction.

In an embodiment, the proposed system is flexible to the addition or removal of a sensor from a list.

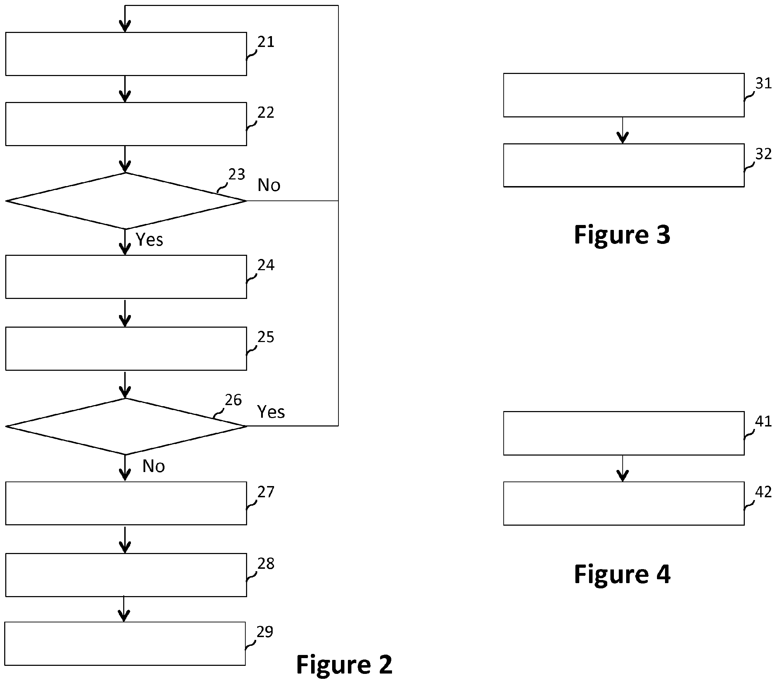

For instance, and as shown in **figure 3,** at a certain moment when a new sensor is added for monitoring, a new mono-modal model is added for analyzing data from such new sensor (step 31) and the weight factor for such new model (i.e. for such new sensor) is initialized as 1 while weight factors for other existing mono-modal model models (i.e. for other sensors) are adjusted as $\alpha_i = \alpha_i * N/(N+1)$, with N and $\alpha_i$ as defined above (step 32).

As shown in **figure 4,** when a given sensor of the plurality of N sensors is detected defective or associated with a mono-modal anomaly model detected unreliable, the method further includes removing from the plurality of N mono-modal anomaly models the mono-modal anomaly model associated with the given sensor (step 41), and adjusting the weight factors of the remaining N-1 mono-modal anomaly models as $\alpha_i = \alpha_i * N/(N-1)$, with N and $\alpha_i$ as defined above (step 42).

Example of using user feedback to adapt the threshold S. In case of false alarm ("false positive"), the threshold S is raised above the value of the anomaly score that triggered the recognition of an alarm, to avoid the triggering of an alarm the next time the same event occurs. In case where a true alarm was not detected ("false negative"), the threshold S is lowered below the maximum value of the anomaly score that didn't triggered the recognition of an alarm, to trigger the recognition of an alarm the next time the same event occurs.

In an embodiment, the method further includes generating a supplemental set of training data based on the user feedback and the sensor data from the plurality of N sensors, and re-training at least one of the N mono-modal models with the supplemental set of training data.

When generating the supplemental set of training data, if the supplemental set of training data is supposed to contain only normal values (of the sensor data), it may be relevant to remove from the supplemental set of training data:

- the samples (sensor data) related to a true anomaly detection ("true positive");
- the samples (sensor data) related to a false anomaly detection ("false positive"); and
- the samples (sensor data) related to an incorrect no-anomaly prediction ("false negative").

In an alternative embodiment, it may be relevant to keep in the supplemental set of training data the samples (sensor data) related to a false anomaly detection ("false positive"), but tagging these samples as relating to a "normal event" ("true negative").

**Figure 2** is a flowchart of an anomaly detection method according to a particular embodiment of the present disclosure. This method is performed by the block 130 ("machine learning (ML) system") and summarizes the operation of the system of figure 1.

In a step 21, the block 130 receives sensor data from the plurality of N sensors.

In a step 22, the block 130 computes an anomaly prediction based on the sensor data, the N mono-modal models (blocks 132) and the rule engine of the "decision maker" (block 133).

In a test step 23, the block 130 checks if the anomaly prediction is an anomaly detection. In case of negative answer in test step 23, the block 130 goes back to step 21. In case of positive answer in test step 23, the block 130 goes to step 24 in which it sends an anomaly event 11 containing the anomaly prediction.

Step 24 is followed by a step 25, in which the block 130 receives a user feedback 12 relating to the anomaly event or to an absence of anomaly event.

Step 25 is followed by a test step 26, in which the block 130 checks if a false detection rate is under a determined level. In case of positive answer in test step 26, the block 130 goes back to step 21. In case of negative answer in test step 26, the block 130 goes to step 27 in which it adapts at least one of the blocks 132 and/or block 133, based on the user feedback.

Step 27 is followed by a step 28, in which the block 130 generates a supplemental set of training data (based on the user feedback and the sensor data from the plurality of N sensors) and a step 29, in which the block 130 re-trains at least one of the N mono-modal models with the supplemental set of training data.

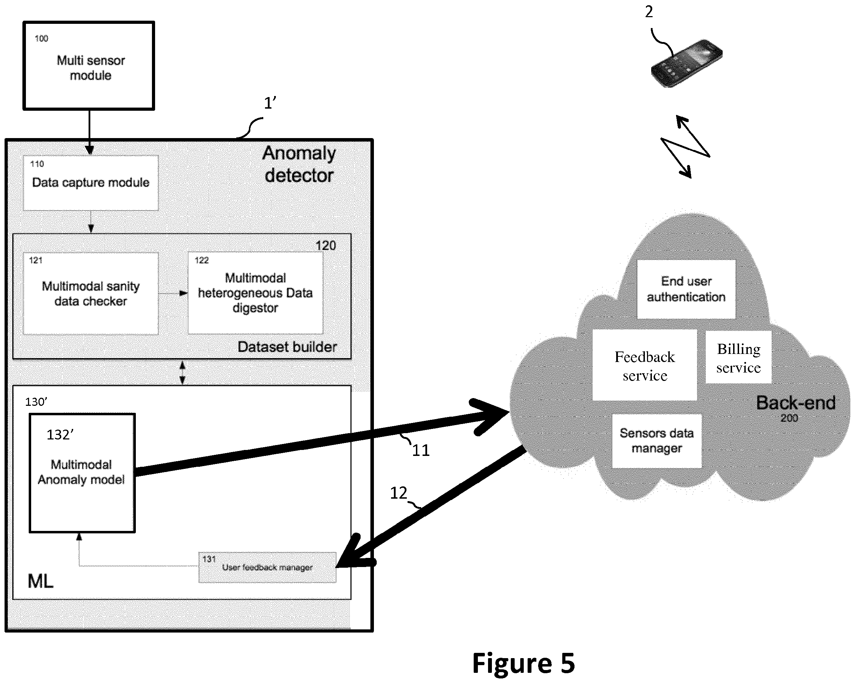

**Figure 5** is a schematic illustration of a system including an anomaly detection device 1' according to a second implementation. This second implementation differs from the first implementation of figure 1 in that the "machine learning (ML) system" is different (block 130' instead of block 130):

- the N mono-modal anomaly models 132 are replaced by a single multimodal anomaly model 132'; and
- there is no block 133 ("decision maker").

The single multi-modal anomaly model 132' is e.g. configured for computing a multi-modal anomaly prediction, based on the sensor data from the plurality of N sensors, and computing an anomaly prediction based on a comparison between the multi-modal anomaly prediction and a threshold S'. If the multi-modal anomaly prediction is greater than the threshold S', the single multi-modal anomaly model 132' decides it is an anomaly detection and sends the anomaly event 11 containing the anomaly detection.

The block 131 ("user feedback manager") adapts the single multi-modal anomaly model 132', based on the user feedback. In an embodiment, the block 131 adapts the threshold S' (adaptation of the same nature as the adaptation of the threshold S in the first implementation).

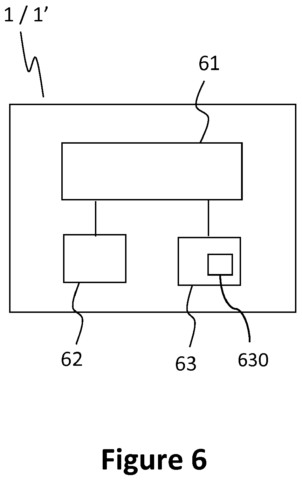

**Figure 6** shows an example of simplified structure of any of the anomaly detection device 1, 1' of figures 1 and 5. The device 1, 1' includes a non-volatile memory 63 (e.g. a read-only memory (ROM) or a hard disk), a volatile memory 62 (e.g. a random access memory or RAM) and a processor (computation machine) 61. The non-volatile memory 63 is a non-transitory computer-readable carrier medium. It stores executable program code instructions 630, which are executed by the processor 61 in order to enable implementation of the blocks 110, 120 and 130 described above and the method described above (see figures 1 to 5). Upon initialization, the program code instructions 630 are transferred from the non-volatile memory 63 to the volatile memory 62 so as to be executed by the processor 61. The volatile memory 62 likewise includes registers for storing the variables and parameters required for this execution.

All the steps of the method described above (see figures 1 to 5) can be implemented by the device by:

- the execution of a set of program code instructions executed by a reprogrammable computing machine such as a PC type apparatus, a DSP (digital signal processor) or a microcontroller. This set of program code instructions can be stored in a non-transitory computer-readable carrier medium that is detachable (for example a floppy disk, a CD-ROM or a DVD-ROM) or non-detachable; or
- a dedicated computing machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, the disclosure can also be implemented in hardware form or any form combining a hardware portion and a software portion.


**Claims**

1. A method for detecting anomalies, the method being performed by a machine learning system (130, 130') configured for learning at least one model (132, 132') from a set of training data, the method comprising:

   - receiving (21) sensor data from a plurality of N sensors (100);
   - computing (22) an anomaly prediction based on the sensor data and the at least one model; and
   - if the anomaly prediction is an anomaly detection, sending an anomaly event (11) containing said anomaly prediction;

   **characterized in that** said method further comprises:

   - receiving (25) a user feedback (12) relating to said anomaly event or to an absence of anomaly event; and
   - adapting (27) the at least one model based on the user feedback.

2. The method according to claim 1, wherein the machine learning system (130) comprises:

   - at least two mono-modal anomaly models (132), each associated with a different one of said plurality of N sensors, and each configured for computing a mono-modal anomaly prediction based on the sensor data from the associated sensor; and
   - a decision maker (133), configured for computing said anomaly prediction by applying at least one decision rule to said mono-modal anomaly predictions;

   and wherein adapting (27) the at least one model based on the user feedback comprises at least one of:

   - adapting at least one of said mono-modal anomaly models; and
   - adapting said at least one decision rule.

3. The method according to claim 2, wherein, in said at least one decision rule, each mono-modal anomaly prediction is weighted by an associated weight factor, and wherein adapting (27) said at least one decision rule comprises at least one of:

- adapting at least one of said weight factors; and
- adapting a threshold to which is compared a combination of the mono-modal anomaly predictions when weighted by their respective weighting factors.

4. The method according to claim 3, wherein said adapting (27) of at least one of said weight factors comprises:

- if the user feedback indicates that the anomaly prediction contained in the anomaly event is correct, increasing the weight factor of each mono-modal anomaly prediction leading to the correct anomaly prediction and decreasing the weight factor of each mono-modal anomaly prediction not leading to the correct anomaly prediction.

5. The method according to any one of claims 3 to 4, wherein said adapting (27) of at least one of said weight factors comprises:

- if the user feedback indicates that the anomaly prediction contained in the anomaly event is incorrect, increasing the weight factor of each mono-modal anomaly prediction not leading to the incorrect anomaly prediction and decreasing the weight factor of each mono-modal anomaly prediction leading to the incorrect anomaly prediction.

6. The method according to any one of claims 3 to 5, wherein said adapting (27) of at least one of said weight factors comprises:

- if the user feedback indicates an absence of anomaly event, corresponding to an incorrect anomaly prediction, increasing the weight factor of each mono-modal anomaly prediction not leading to the incorrect anomaly prediction and decreasing the weight factor of each mono-modal anomaly prediction leading to the incorrect anomaly prediction.

7. The method according to any one of claims 1 to 6, wherein, when a new sensor is added to said plurality of N sensors, said method further comprises:

- adding (31) a new mono-modal anomaly model for analyzing sensor data from said new sensor; and
- initializing (32) as 1 the weight factor of said new mono-modal anomaly model while adjusting (32) as $\alpha_i = \alpha_i{}^*N/(N+1)$ the weight factors for other existing mono-modal anomaly models, with $\alpha_i$ the weight factor of the $i^{th}$ sensor.

8. The method according to any one of claims 1 to 7, wherein, when a given sensor of said plurality of N sensors is detected defective or associated with a mono-modal anomaly model detected unreliable, said method further comprises:

- removing (41) from the plurality of N mono-modal anomaly models the mono-modal anomaly model associated with said given sensor; and
- adjusting (42) the weight factors of the remaining N-1 mono-modal anomaly models as $\alpha_i = \alpha_i{}^*N/(N-1)$, with $\alpha_i$ the weight factor of the $i^{th}$ sensor.

9. The method according to claim 1, wherein the machine learning system (130') comprises a single multi-modal anomaly model (132'), configured for:

- computing a multi-modal anomaly prediction, based on the sensor data from the plurality of sensors; and
- computing said anomaly prediction based on a comparison between said multi-modal anomaly prediction and a threshold;

and wherein adapting (27) the at least one model based on the user feedback comprises adapting said single multi-modal anomaly model.

10. The method according to claim 9, wherein adapting said single multi-modal anomaly model comprises adapting said threshold.

11. The method according to any one of claims 1 to 10, wherein adapting (27) the at least one model based on the user feedback is not performed if a false detection rate is under a determined level (26).

**12.** The method according to any one of claims 1 to 10, wherein said method further comprises:

- generating (28) a supplemental set of training data based on the user feedback and the sensor data from the plurality of N sensors; and
- re-training (29) said at least one model with the supplemental set of training data.

**13.** A computer program product (630) comprising program code instructions for implementing the method according to any one of the claims 1 to 12, when said program is executed on a computer or a processor (61).

**14.** Non-transitory computer-readable carrier medium (63) storing a computer program product (630) according to claim 13.

**15.** A device for detecting anomalies (1, 1'), said device comprising a reprogrammable or dedicated computation machine (61, 62, 63) configured for implementing a machine learning system (130) itself configured for:

- learning at least one model from a set of training data;
- receiving sensor data from a plurality of N sensors;
- computing an anomaly prediction based on the sensor data and the at least one model; and
- if the anomaly prediction is an anomaly detection, sending an anomaly event containing said anomaly prediction;

**characterized in that** said machine learning system (130) is further configured for:

- receiving a user feedback relating to said anomaly event or to an absence of anomaly event; and
- adapting the at least one model based on the user feedback.

**Figure 1**

Figure 2

21
22
23  No
Yes
24
25
26  Yes
No
27
28
29

31
32

Figure 3

41
42

Figure 4

EP 3 767 553 A1

Figure 5

**Figure 6**

Europäisches
Patentamt

European
Patent Office

Office européen
des brevets

## EUROPEAN SEARCH REPORT

Application Number

EP 19 18 6914

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/279834 A1 (VASSEUR JEAN-PHILIPPE [US] ET AL) 28 September 2017 (2017-09-28) * abstract * * paragraph [0018] * * paragraph [0034] - paragraph [0066] * | 1-15 | INV. G06N20/00 H04L29/06 |
| A | US 9 516 053 B1 (MUDDU SUDHAKAR [US] ET AL) 6 December 2016 (2016-12-06) * column 8, line 5 - line 36 * * column 11, line 59 - column 12, line 22 * * column 15, line 50 - column 16, line 20 * * column 36, line 65 - column 40, line 19 * * column 96, line 49 - column 98, line 40 * | 1-15 | |
| A | US 2018/248903 A1 (VILLELLA PHILLIP [US] ET AL) 30 August 2018 (2018-08-30) * paragraph [0067] - paragraph [0068] * * paragraph [0083] - paragraph [0109] * | 1-15 | |
| A | US 2019/166141 A1 (XU YE [US] ET AL) 30 May 2019 (2019-05-30) * paragraph [0074] - paragraph [0075] * * paragraph [0078] * | 1-15 | TECHNICAL FIELDS SEARCHED (IPC) H04L G06F G06N |
| A | US 2018/316704 A1 (JOSEPH DURAIRAJ SATHEESH KUMAR [US] ET AL) 1 November 2018 (2018-11-01) * paragraph [0075] - paragraph [0079] * | 1-15 | |

The present search report has been drawn up for all claims

| Place of search | Date of completion of the search | Examiner |
|---|---|---|
| Munich | 29 October 2019 | Hultsch, Wolfgang |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

## ANNEX TO THE EUROPEAN SEARCH REPORT
## ON EUROPEAN PATENT APPLICATION NO.

EP 19 18 6914

This annex lists the patent family members relating to the patent documents cited in the above-mentioned European search report.
The members are as contained in the European Patent Office EDP file on
The European Patent Office is in no way liable for these particulars which are merely given for the purpose of information.

29-10-2019

| Patent document cited in search report | | | Publication date | Patent family member(s) | | Publication date |
|---|---|---|---|---|---|---|
| US | 2017279834 | A1 | 28-09-2017 | US | 2017279834 A1 | 28-09-2017 |
| | | | | US | 2017279835 A1 | 28-09-2017 |
| US | 9516053 | B1 | 06-12-2016 | US | 9516053 B1 | 06-12-2016 |
| | | | | US | 2017063886 A1 | 02-03-2017 |
| | | | | US | 2017063887 A1 | 02-03-2017 |
| | | | | US | 2017063888 A1 | 02-03-2017 |
| | | | | US | 2017063889 A1 | 02-03-2017 |
| | | | | US | 2017063890 A1 | 02-03-2017 |
| | | | | US | 2017063891 A1 | 02-03-2017 |
| | | | | US | 2017063894 A1 | 02-03-2017 |
| | | | | US | 2017063896 A1 | 02-03-2017 |
| | | | | US | 2017063897 A1 | 02-03-2017 |
| | | | | US | 2017063898 A1 | 02-03-2017 |
| | | | | US | 2017063899 A1 | 02-03-2017 |
| | | | | US | 2017063900 A1 | 02-03-2017 |
| | | | | US | 2017063901 A1 | 02-03-2017 |
| | | | | US | 2017063902 A1 | 02-03-2017 |
| | | | | US | 2017063903 A1 | 02-03-2017 |
| | | | | US | 2017063904 A1 | 02-03-2017 |
| | | | | US | 2017063905 A1 | 02-03-2017 |
| | | | | US | 2017063906 A1 | 02-03-2017 |
| | | | | US | 2017063907 A1 | 02-03-2017 |
| | | | | US | 2017063908 A1 | 02-03-2017 |
| | | | | US | 2017063909 A1 | 02-03-2017 |
| | | | | US | 2017063910 A1 | 02-03-2017 |
| | | | | US | 2017063911 A1 | 02-03-2017 |
| | | | | US | 2017063912 A1 | 02-03-2017 |
| | | | | US | 2017134410 A1 | 11-05-2017 |
| | | | | US | 2017134415 A1 | 11-05-2017 |
| | | | | US | 2017142140 A1 | 18-05-2017 |
| | | | | US | 2017223036 A1 | 03-08-2017 |
| | | | | US | 2017272458 A1 | 21-09-2017 |
| | | | | US | 2018054452 A1 | 22-02-2018 |
| | | | | US | 2018069888 A1 | 08-03-2018 |
| | | | | US | 2018146000 A1 | 24-05-2018 |
| | | | | US | 2018219897 A1 | 02-08-2018 |
| | | | | US | 2018288079 A1 | 04-10-2018 |
| | | | | US | 2018302423 A1 | 18-10-2018 |
| | | | | US | 2018351981 A1 | 06-12-2018 |
| | | | | US | 2018367551 A1 | 20-12-2018 |
| | | | | US | 2019075126 A1 | 07-03-2019 |
| | | | | US | 2019109868 A1 | 11-04-2019 |
| | | | | US | 2019158517 A1 | 23-05-2019 |
| | | | | US | 2019173893 A1 | 06-06-2019 |
| | | | | US | 2019327251 A1 | 24-10-2019 |

EPO FORM P0459

For more details about this annex : see Official Journal of the European Patent Office, No. 12/82

page 1 of 2

## ANNEX TO THE EUROPEAN SEARCH REPORT
## ON EUROPEAN PATENT APPLICATION NO.

EP 19 18 6914

29-10-2019

| Patent document cited in search report | Publication date | Patent family member(s) | Publication date |
|---|---|---|---|
| US 2018248903 A1 | 30-08-2018 | CA    3054573 A1<br>US  2018248903 A1<br>US  2018248904 A1<br>WO  2018156976 A2 | 30-08-2018<br>30-08-2018<br>30-08-2018<br>30-08-2018 |
| US 2019166141 A1 | 30-05-2019 | NONE | |
| US 2018316704 A1 | 01-11-2018 | NONE | |

EPO FORM P0459

For more details about this annex : see Official Journal of the European Patent Office, No. 12/82

page 2 of 2